# EUROPÄISCHE PATENTSCHRIFT

(11) **EP 4 590 521 B1**
(45) Veröffentlichungstag und Bekanntmachung des Hinweises auf die Patenterteilung: **25.11.2026**
(21) Anmeldenummer: 23771811.9
(22) Anmeldetag: 12.09.2023
(51) Int. Cl.: B60B 3/00, B60B 7/06, B60B 7/14, B60B 15/24, B60C 27/02

(54) **ZUBEHÖRADAPTER ZUR BEFESTIGUNG VON KRAFTFAHRZEUGZUBEHÖR AN EINER MIT EINER MITTENBOHRUNG VERSEHENEN FELGE EINES KRAFTFAHRZEUGS**
ACCESSORY ADAPTER FOR FASTENING MOTOR VEHICLE ACCESSORIES TO A RIM OF A MOTOR VEHICLE, SAID RIM HAVING A CENTER BORE
ADAPTATEUR D'ACCESSOIRES POUR FIXER DES ACCESSOIRES DE VÉHICULE AUTOMOBILE À UNE JANTE D'UN VÉHICULE AUTOMOBILE, LADITE JANTE POSSÉDANT UN ALÉSAGE CENTRAL

(30) Priorität: 23.09.2022 DE 102022124510
(43) Veröffentlichungstag der Anmeldung: 30.07.2025
(73) Patentinhaber: RUD Ketten Rieger & Dietz GmbH u. Co. KG, 73432 Aalen (DE)
(72) Erfinder: ARRIGONI NERI, Marco, 22046 (CO) Merone (IT)
(74) Vertreter: Grünecker Patent- und Rechtsanwälte PartG mbB
(86) Internationale Anmeldenummer: PCT/EP2023/074962
(87) Internationale Veröffentlichungsnummer: WO 2024/061685

(56) Entgegenhaltungen:
- EP-B1- 3 037 277
- DE-A1- 102022 002 497
- DE-U1- 202016 001 366
- US-A1- 2004 000 363
- US-A1- 2017 282 642
- US-A1- 2022 088 961

## Beschreibung

Die Erfindung betrifft einen Zubehöradapter zur Befestigung von Kraftfahrzeugzubehör, wie beispielsweise einer Gleitschutzvorrichtung, an einer mit einer Mittenbohrung versehenen Felge eines Kraftfahrzeugs. Die Erfindung betrifft darüber hinaus eine Felge für ein Kraftfahrzeug, die mit einer Mittenbohrung versehen ist sowie eine Gleitschutzvorrichtung mit einem auf einer Lauffläche eines Reifens auflegbaren Traktionsmittel.

Um Kraftfahrzeugzubehör, insbesondere Schneeketten, an einer Felge zu befestigen, werden in der Regel zunächst Zubehöradapter an der Felge angebracht. An diesen Zubehöradaptern kann dann Kraftfahrzeugzubehör befestigt werden. Neben Schneeketten können auch andere Arten von Zubehör, beispielsweise Fahrzeugabdeckungen, über einen Zubehöradapter an einer Felge befestigt werden.

Für Kraftfahrzeuge sind Felgen bekannt, die über eine Mittenbohrung verfügen. Insbesondere Leichtmetallfelgen, beispielsweise Aluminiumfelgen, sind häufig mit einer Mittenbohrung versehen.

Die DE 10 2022 002 497 A1 zeigt ein Felgenadaptersystem für eine Felge, mit einem ersten Adapterelement, welches bestimmungsgemäß in eine Radnabenbohrung der Felge zumindest teilweise einführbar ist. Das erste Adapterelement ist an eine vorgegebene Geometrie der Radnabenbohrung angepasst. Das Felgenadaptersystem umfasst weiter ein zum ersten Adapterelement korrespondierendes zweites Adapterelement zum bestimmungsgemäßen Befestigen des ersten Adapterelements an der Felge und eine Anbindungsstelle, die Bestandteil des ersten Adapterelements ist, zum bestimmungsgemäßen Aufnehmen eines Anschlagelements, welches zum Anschlagen eines Anschlagsmittels vorgesehen ist. Des Weiteren betrifft die Erfindung eine Felge und ein Verfahren zum Anbringen eines Anschlagelements an einer Felge.

Die DE 20 2016 001 366 U1 offenbart eine Radabdeckung mit Befestigungsvorrichtung für ein Fahrzeugrad, welche mittels einer Befestigungsvorrichtung in der zentralen Mittenlochbohrung einer Felge lösbar befestigt ist. Die Befestigungsvorrichtung umfasst einen passgenauen Adapter, welcher fahrzeugseitig in der Mittenlochbohrung der Felge verdrehsicher angeordnet ist sowie einen drehbar gelagerten Aufnahmekopf an der vom Fahrzeug abgewandten Seite der Felge. Der Aufnahmekopf wird mittig durch eine Achsbefestigung, wenigstens mittels eines Bolzens durch den Adapter und den Aufnahmekopf von einer Sicherungsschraube positioniert. Wenigstens ein Radabdeckungselement ist mittels in dem Aufnahmekopf angeordneter Befestigungsvorrichtungen lösbar an dem Aufnahmekopf befestigbar.

Es ist die Aufgabe der Erfindung, einen Zubehöradapter zur Befestigung von Kraftfahrzeugzubehör an einer Felge mit Mittenbohrung bereitzustellen, wobei der Zubehöradapter auch dann an der Felge verbleiben kann, wenn das Kraftfahrzeugzubehör nicht verwendet wird, ohne dabei die Funktion oder das äußere Erscheinungsbild der Felge zu beeinträchtigen.

Diese Aufgabe ist durch einen Zubehöradapter gelöst, der wenigstens ein zur karosserieseitigen Anlage an der Felge ausgestaltetes karosserieseitiges Adapterteil und ein zur außenseitigen Anlage an der Felge ausgestaltetes außenseitiges Adapterteil umfasst, wobei eines der Adapterteile ein Verbindungselement zur Anbringung des Kraftfahrzeugzubehörs aufweist, und wobei die beiden Adapterteile in einem an der Felge montierten Zustand des Zubehöradapters durch die Mittenbohrung hindurchunverlierbar miteinander verbunden sind, und wobei eines der beiden Adapterteile zwei zumindest abschnittsweise voneinander beabstandete Backen aufweist, wobei das Verbindungselement als ein die beiden Backen miteinander verbindender Steg gebildet ist.

Für die Felge ist die erfindungsgemäße Aufgabe dadurch gelöst, dass die Felge einen Zubehöradapter der oben genannten Art umfasst, wobei das eine Adapterteil an einer Innenseite der Felge und das andere Adapterteil an einer Außenseite der Felge angeordnet ist, beide Adapterteile durch die Mittenbohrung hindurch miteinander verbunden sind und das Verbindungselement des Zubehöradapters von außen zugänglich ist.

Für die erfindungsgemäße Gleitschutzvorrichtung ist die Aufgabe dadurch gelöst, dass die Gleitschutzvorrichtung mit einem Zubehöradapter der oben genannten Art versehen ist, wobei das Traktionsmittel mittelbar oder unmittelbar am Verbindungselement des Zubehöradapters befestigt ist. Das Traktionsmittel kann insbesondere eine Schneekette sein.

Die erfindungsgemäße Lösung erlaubt es, den Zubehöradapter im Bereich der Mittenbohrung der Felge anzubringen. Dadurch kann das äußere Erscheinungsbild der Felge ungestört bleiben. Insbesondere kann auf Halterungen, welche an Radschrauben oder Radmuttern angebracht werden müssen, verzichtet werden. Dadurch, dass der Zubehöradapter aus zwei Adapterteilen besteht, von denen jedes an einer Seite der Felge angebracht und diese dann durch die Mittenbohrung hindurch miteinander verbunden werden, kann der Zubehöradapter sicher an der Felge halten. In einem an der Felge montierten Zustand des Zubehöradapters kann zumindest ein Abschnitt der Felge eine Zwischenlage zwischen den beiden Adapterteilen darstellen. Mit anderen Worten können die Adapterteile eine Aufnahme für zumindest einen Abschnitt der Felge zwischen sich aufspannen.

Die erfindungsgemäße Lösung kann durch verschiedene, jeweils für sich vorteilhafte und beliebig miteinander kombinierbare Ausgestaltungen weiter verbessert werden. Auf diese Ausgestaltungen und die mit ihnen verbundenen Vorteile ist im Folgenden eingegangen.

Gemäß einer ersten vorteilhaften Ausgestaltung des Zubehöradapters kann wenigstens eines der beiden Adapterteile im Wesentlichen scheiben- und/oder ringförmig sein. Insbesondere kann wenigstens eines der beiden Adapterteile ringscheibenförmig sein. Im an der Felge montierten Zustand des Zubehöradapters kann das wenigstens eine scheiben- und/oder ringförmige Adapterteil vorzugsweise koaxial mit einer Drehachse der Felge angeordnet sein. Die Drehachse der Felge fällt mit der Drehachse des mit der Felge versehenen Fahrzeugrades zusammen. Durch die genannte Anordnung des Zubehöradapters an der Felge kann eine gleichmäßige Anlage des Adapterteils an der Felge erreicht werden. Diese kann die Stabilität der Verbindung zwischen Zubehöradapter und Felge verbessern. Darüber hinaus kann die Störung des äußeren Erscheinungsbildes der Felge vermieden werden.

Um einen stabilen Zubehöradapter, insbesondere im an der Felge montierten Zustand, zu erhalten, können die beiden Adapterteile zueinander komplementäre Befestigungsmittel aufweisen, die sich bei durch die Mittenbohrung hindurch miteinander verbundenen Adapterteilen miteinander im Eingriff befinden.

Ein einfacher Aufbau kann erhalten werden, wenn die Befestigungsmittel der beiden Adapterteile als zueinander komplementäre Gewinde gebildet sind, die im an der Felge montierten Zustand des Zubehöradapters miteinander verschraubt sind. Beispielsweise kann eines der beiden Adapterteile mit einem Innengewinde und das andere Adapterteil mit einem zum Innengewinde passenden Außengewinde versehen sein. Beide Adapterteile lassen sich dann einfach miteinander verschrauben.

Eine Alternative zur Verbindung der beiden Adapterteile durch Gewinde kann darin bestehen, dass das Befestigungsmittel eines der beiden Adapterteile als eine entlang einer Umfangsrichtung des Zubehöradapters umlaufende Nut und das Befestigungsmittel des anderen Adapterteils als ein in die Nut einsetzbares Sicherungselement gebildet ist. Dadurch kann ein Formschluss der beiden Befestigungsmittel in axialer Richtung erreicht werden. Das Sicherungselement kann beispielsweise ein Sicherungsring, insbesondere ein Nutenring oder ein Sprengring sein.

Eine weitere alternative Art der Verbindung der beiden Adapterteile miteinander kann darin bestehen, dass die beiden zueinander komplementären Befestigungsmittel zusammen einen Bajonettverschluss bilden.

Alternativ oder zusätzlich zu den oben beschriebenen zueinander komplementären Befestigungsmitteln kann der Zubehöradapter wenigstens ein Verbindungsmittel, insbesondere wenigstens ein separates und wiederholt lösbares Verbindungsmittel, zur Verbindung der beiden Adapterteile miteinander, insbesondere durch die Mittenbohrung hindurch, umfassen. Das wenigstens eine Verbindungsmittel erstreckt sich bevorzugt im an der Felge montierten Zustand des Zubehöradapters parallel zur axialen Richtung der Felge. Bevorzugt weist der Zubehöradapter wenigstens zwei Verbindungsmittel auf, die sich im an der Felge montierten Zustand des Zubehöradapters vorzugsweise diametral über die Achse der Felge gegenüberliegen.

Gemäß einer einfachen Ausgestaltung des Zubehöradapters kann das wenigstens eine Verbindungsmittel eine Schraube sein. Dabei kann eines der beiden Adapterteile mit einer Durchführung für die Schraube und das andere Adapterteil mit einem Gegengewinde für das Schraubengewinde versehen sein. Alternativ zur Schraube kann das wenigstens eine Verbindungsmittel ein Bolzen, insbesondere ein Kugelsperrbolzen sein. Ein Kugelsperrbolzen kann zur besonders schnellen Montage verwendet werden.

Eines der beiden Adapterteile kann einen Zentriervorsprung aufweisen, der ausgestaltet ist, an einer Innenwandung der Mittenbohrung anzuliegen. Der Zentriervorsprung kann die Montage des Zubehöradapters an der Felge erleichtern. Bevorzugt ist der Zentriervorsprung ausgestaltet, im an der Felge montierten Zustand des Zubehöradapters die Mittenbohrung zu durchragen.

Als Alternative zur Ausgestaltung des Zubehöradapters, bei dem eines der beiden Adapterteile mit einem Zentriervorsprung versehen ist, können beide Adapterteile mit je einem Zentriervorsprung versehen sein, wobei sich die beiden Zentriervorsprünge durch die Mittenbohrung der Felge hindurch miteinander verbinden lassen.

Um einen kompakten Aufbau eines Zubehöradapters mit zueinander komplementären Befestigungsmitteln und mit einem Zentriervorsprung zu erhalten, kann das Befestigungsmittel desjenigen Adapterteils, dass den Zentriervorsprung aufweist, am Zentriervorsprung angeordnet sein. Durch die Anordnung am Zentriervorsprung kann das Befestigungsmittel näher am anderen Adapterteil angeordnet sein, wodurch sich die Verbindung mit dem anderen Adapterteil leichter herstellen lässt. Bevorzugt ist der Zentriervorsprung an dem Adapterteil angeordnet ist, das im an der Felge montierten Zustand des Zubehöradapters karosserieseitig angeordnet ist, dies ist jedoch nicht zwingend.

Gemäß einer weiteren vorteilhaften Ausgestaltung des Zubehöradapters kann das Verbindungselement zur Anbringung des Kraftfahrzeugzubehörs am Zentriervorsprung angeordnet sein. Dadurch kann ein kompakter und stabiler Aufbau erhalten werden. Das Verbindungselement kann einstückig mit einem der beiden Adapterteile, insbesondere mit dem Zentriervorsprung eines der beiden Adapterteile gebildet sein.

Der Steg kann insbesondere stangen- oder bolzenförmig sein. Quer zu einer Längsachse des Stegs kann auf diese Weise Platz für ein Befestigungsmittel eines Kraftfahrzeugzubehörs freigehalten werden. Ist das Befestigungsmittel des Kraftfahrzeugzubehörs beispielsweise ein Haken, so kann der Haken um den Steg greifend angeordnet und am Steg befestigt sein. Die Backen des Adapterteils sind bevorzugt Teil des Zentriervorsprungs.

Die Adapterteile können aus Stahl, einem Leichtmetall wie beispielsweise Aluminium, aus Kunststoff oder aus einer Kombination verschiedener Materialien gebildet sein. Gemäß einer vorteilhaften Ausgestaltung kann ein Adapterteil, welches die oben genannten Backen aufweist, aus Kunststoff gebildet sein, während der Steg als ein metallischer Bolzen, insbesondere aus Stahl, gebildet ist, der sich in beide Backen hinein erstreckt und von diesen gehalten ist. Der Bolzen kann beispielsweise vom Material des Adapterteils umspritzt oder nachträglich in Öffnungen in den Backen eingesetzt sein.

Der Zubehöradapter kann eine am Verbindungselement verliersicher anbringbare Abdeckung umfassen. Die Abdeckung kann beispielsweise am Zubehöradapter angebracht werden, wenn das Kraftfahrzeugzubehör nicht genutzt wird. Die Abdeckung kann dem Schutz des Zubehöradapters dienen. Darüber hinaus kann das Erscheinungsbild der Felge verbessert werden. Vorteilhafterweise kann die Abdeckung mit einem Logo, insbesondere dem Logo des Fahrzeugherstellers versehen sein.

Die erfindungsgemäße Felge mit dem Zubehöradapter kann dadurch weiter verbessert werden, dass wenigstens eines der Adapterteile in einer radialen Richtung der Felge innerhalb eines Lochkreises der Felge angeordnet ist. Mit anderen Worten überlappt das Adapterteil nicht mit den Löchern des Lochkreises. Hierdurch kann verhindert werden, dass das Adapterteil die Befestigung der Felge am Kraftfahrzeug erschwert. Der Lochkreis der Felge ist durch die Löcher gebildet, die zur Befestigung der Felge an der Radnabe vorgesehen sind.

Vorzugsweise ist das an der Karosserieseite der Felge angeordnete Adapterteil von der Karosserieseite der Felge her, insbesondere nur von der Karosserieseite, in die Mittenöffnung einführbar ausgestaltet.

Um die Sicherheit der Verbindung zwischen dem Zubehöradapter und der Felge zu verbessern, kann die Mittenbohrung mit wenigstens einer radial nach innen vorspringenden Schulter, insbesondere einer in Umfangsrichtung umlaufenden Schulter, versehen sein, die zwischen den beiden miteinander verbundenen Adapterteilen des Zubehöradapters angeordnet ist. Bevorzugt ist die Schulter zumindest abschnittsweise zwischen den beiden Adapterteilen aufgenommen. Dabei kann sie kraftschlüssig und oder formschlüssig von den beiden Adapterteilen gehalten sein, insbesondere in axialer Richtung der Felge.

Im an der Felge montierten Zustand des Zubehöradapters kann sich wenigstens eines der beiden Adapterteile, insbesondere ein Zentriervorsprung eines Adapterteils, in der Mittenbohrung an der Schulter vorbei erstrecken, insbesondere in axialer Richtung der Felge.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen kann nach Maßgabe der obigen Ausführungen entsprechend den für einen bestimmten Anwendungsfall notwendigen Eigenschaften des erfindungsgemäßen Zubehöradapters durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1: Eine perspektivische Darstellung einer mit einer Mittenbohrung versehenen Felge;
- Fig. 2: einen Ausschnitt der Felge aus Fig. 1 mit 2 schematisch dargestellten Adapterteilen eines Zubehöradapters vor der Montage an der Felge;
- Fig. 3: den Zubehöradapter aus Fig. 2 in einem an der Felge montierten Zustand in einer perspektivischen Darstellung;
- Fig. 4: den Zubehöradapter aus Fig. 2 im an der Felge montierten Zustand in einer Schnittdarstellung;
- Fig. 5-7: eine vorteilhafte Ausführungsform eines Zubehöradapters mit miteinander verschraubbaren Befestigungsmitteln;
- Fig. 8-10: eine vorteilhafte Ausführungsform eines Zubehöradapters mit einer Nut und einem Sicherungsring als Befestigungsmitteln;
- Fig. 11-13: eine vorteilhafte Ausführungsform eines Zubehöradapters mit Schrauben als Verbindungsmitteln;
- Fig. 14-16: eine vorteilhafte Ausführungsform eines Zubehöradapters mit Kugelsperrbolzen als Verbindungsmitteln; und
- Fig. 17: schematisch eine Schneekette an einem Fahrzeugreifen.

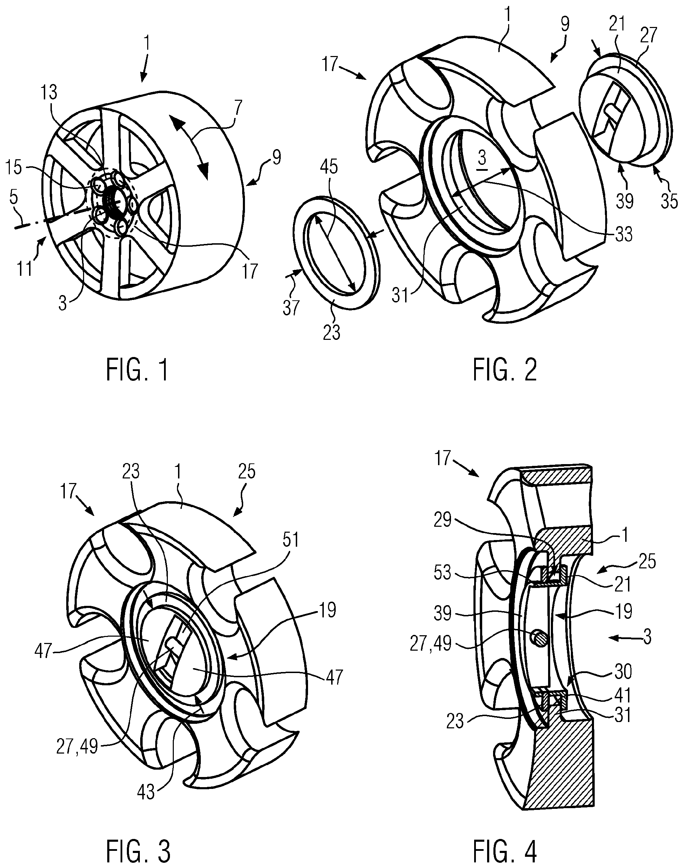

Im Folgenden ist der allgemeine Aufbau einer einfachen Ausführungsform eines erfindungsgemäßen Zubehöradapters mit Bezug auf die in Fig. 1 beispielhaft dargestellte Felge mit Mittenbohrung beschrieben.

Fig. 1 zeigt beispielhaft eine Felge 1 für ein Kraftfahrzeug (nicht dargestellt). Die Felge 1 ist mit einer Mittenbohrung 3 versehen. Die Mittenbohrung 3 befindet sich im radialen Zentrum der Felge 1.

Die Mittenbohrung 3 erstreckt sich entlang einer Achse 5 durch die Felge 1 hindurch. Die Achse 5, welche die axiale Richtung 5 der Felge definiert, fällt in einem am Kraftfahrzeug montierten Zustand der Felge 1 mit der Drehachse eines mit der Felge 1 versehenen Fahrzeugrades zusammen. Um die Achse 5 herum erstreckt sich die Felge 1 entlang einer Umfangsrichtung 7.

Die Felge 1 weist eine Karosserieseite 9 auf, welche in einem am Kraftfahrzeug montierten Zustand der Felge 1 näher am Kraftfahrzeug angeordnet ist. Entlang der Achse 5 der Karosserieseite 9 gegenüberliegend weist die Felge 1 einer Außenseite 11 auf, welche im am Kraftfahrzeug montierten Zustand der Felge 1 von außen sichtbar und zugänglich ist.

Die Felge 1 weist einen Lochkreis 13 auf, der aus Löchern 15 gebildet ist, durch die Befestigungsschrauben zum Befestigen der Felge 1 am Kraftfahrzeug geführt werden können. Der Lochkreis 13 ist koaxial mit der Mittenbohrung 3 angeordnet.

In den Figuren 2 bis 16 ist von der Felge 1 stets nur der In Fig. 1 markierte Ausschnitt 17 dargestellt.

Der Zubehöradapter 19 weist zwei Adapterteile 21 und 23 auf. Das karosserieseitige Adapterteil 21 ist zur karosserieseitigen Anlage an der Felge 1 ausgestaltet. D.h., das karosserieseitige Adapterteil 21 ist ausgestaltet, an der Karosserieseite 9 der Felge 1 anzuliegen.

Das außenseitige Adapterteil 23 ist zur außenseitigen Anlage an der Felge 1 ausgestaltet. Mit anderen Worten kann das außenseitige Adapterteil 23 an der Außenseite 11 der Felge 1 anliegen.

Beide Adapterteile 21 und 23 sind in einem an der Felge montierten Zustand 25 des Zubehöradapters 19 durch die Mittenbohrung 3 hindurch unverlierbar miteinander verbunden. Dabei ragt wenigstens eines der beiden Adapterteile 21 und 23 durch die Mittenbohrung 3 hindurch und ist mit dem jeweils anderen Adapterteil 21 oder 23 verbunden.

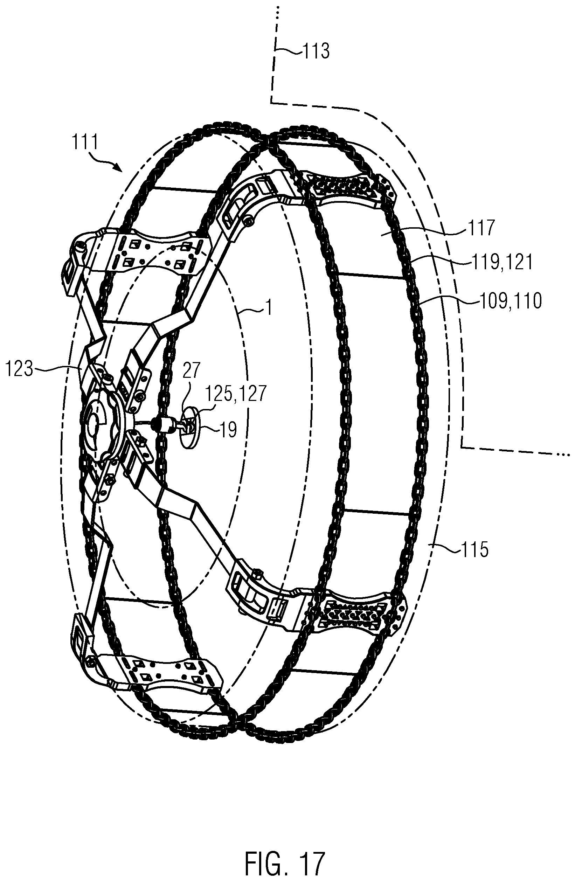

Der Zubehöradapter 19 weist ein Verbindungselement 27 auf, das zur Anbringung von Kraftfahrzeugzubehör dient. Das Kraftfahrzeugzubehör kann insbesondere eine Gleitschutzvorrichtung, bevorzugt eine Schneekette, sein. Eine Schneekette als beispielhaftes Kraftfahrzeugzubehör ist in Fig. 17 dargestellt.

Das Verbindungselement 27 ist Teil eines der beiden Adapterteile 21 oder 23. Lediglich beispielhaft ist das Verbindungselement 27 als Teil des karosserieseitigen Adapterteils 21 dargestellt.

Im an der Felge montierten Zustand 25 des Zubehöradapters 19 ist bevorzugt zumindest ein Abschnitt der Felge 1 zwischen den beiden Adapterteilen 21 und 23 angeordnet. So kann der Zubehöradapter 19 entlang der Achse 5 der Felge 1 formschlüssig und unverlierbar an der Felge 1 gehalten sein.

Die beiden Adapterteile 21 und 23 können eine Aufnahme 29 für wenigstens einen Abschnitt der Felge 1 zwischen sich aufspannen. Die Aufnahme 29 erstreckt sich bevorzugt durchgängig entlang der Umfangsrichtung 7. Die Aufnahme 29 kann eine radial nach außen offene Nut zur abschnittsweisen Aufnahme der Felge 1 darstellen.

Im an der Felge 1 montierten Zustand 25 des Zubehöradapters 19 kann die Felge 1 eine Zwischenlage zwischen den beiden Adapterteilen 21 und 23 darstellen.

Die Mittenbohrung 3 der Felge 1 weist eine Innenseite 30 auf. Die Innenseite 30 begrenzt die Mittenbohrung 3 radial.

Vorzugsweise ist die Felge 1 mit einer radial nach innen vorspringenden und vorzugsweise in Umfangsrichtung 7 umlaufenden Schulter 31 versehen, die zwischen den beiden miteinander verbundenen Adapterteilen 21 und 23 angeordnet ist. Die Schulter 31 kann Teil der Innenseite 30 sein.

Die Schulter 31 ist bevorzugt im an der Felge 1 montierten Zustand 25 des Zubehöradapters 19 in der durch die beiden Adapterteile 21 und 23 aufgespannten Aufnahme 29 angeordnet.

Beide Adapterteile 21 und 23 sind bevorzugt im Wesentlichen scheibenförmig mit kreisrunden Umfängen. Bevorzugt, aber nicht zwingend, ist das außenseitige Adapterteil 23 ringscheibenförmig. Das karosserieseitige Adapterteil 21 ist vorzugsweise scheibenförmig.

Im Bereich der Schulter 31 hat die Mittenbohrung vorzugsweise einen Innendurchmesser 33, der kleiner ist als der Außendurchmesser 35 des karosserieseitigen Adapterteils 21 und als der Außendurchmesser 37 des außenseitigen Adapterteils 23.

Eines der beiden Adapterteile 21 oder 23, bevorzugt das karosserieseitige Adapterteil 21, weist einen Zentriervorsprung 39 auf, der ausgestaltet ist, an einer Innenwandung 41 der Mittenbohrung 3 anzuliegen. Die Innenwandung 41 kann Teil der Innenseite 30 sein. Der Zentriervorsprung 39 ist bevorzugt kreisrund.

Der Zentriervorsprung 39 kann bei der Montage von der Karosserieseite 9 der Felge 1 her in die Mittenbohrung 3 eingesetzt werden. Der Zentriervorsprung 39 kann das Einsetzen in die Mittenbohrung 3 erleichtern.

Vorzugsweise erstreckt sich der Zentriervorsprung 39 durch die Mittenbohrung 3 hindurch bis zur Außenseite 11 der Felge 1, sodass der Zentriervorsprung 39 als Teil des karosserieseitigen Adapterteils 21 zur Verbindung mit dem außenseitigen Adapterteil 23 zur Verfügung steht.

Das karosserieseitige Adapterteil 21 erstreckt sich im an der Felge 1 montierten Zustand 25 bevorzugt an der Schulter 31 der Felge 1 vorbei. Insbesondere erstreckt sich das karosserieseitige Adapterteil 21 bevorzugt mit dem Zentriervorsprung 39 an der Schulter 31 vorbei.

Der Zentriervorsprung 39 kann im an der Felge montierten Zustand 25 durch das ringförmige außenseitige Adapterteil 23 durchragen. Vorzugsweise ist der Außendurchmesser 43 des Zentriervorsprungs 39 gleich groß oder kleiner als ein Innendurchmesser 45 des ringförmigen außenseitigen Adapterteils 23.

In dem Zustand, in dem der Zentriervorsprung 39 das Adapterteil 23 durchragt, können diese beiden Teile fest miteinander verbunden werden, wodurch der Zubehöradapter 19 unverlierbar an der Felge 1 gehalten sein kann.

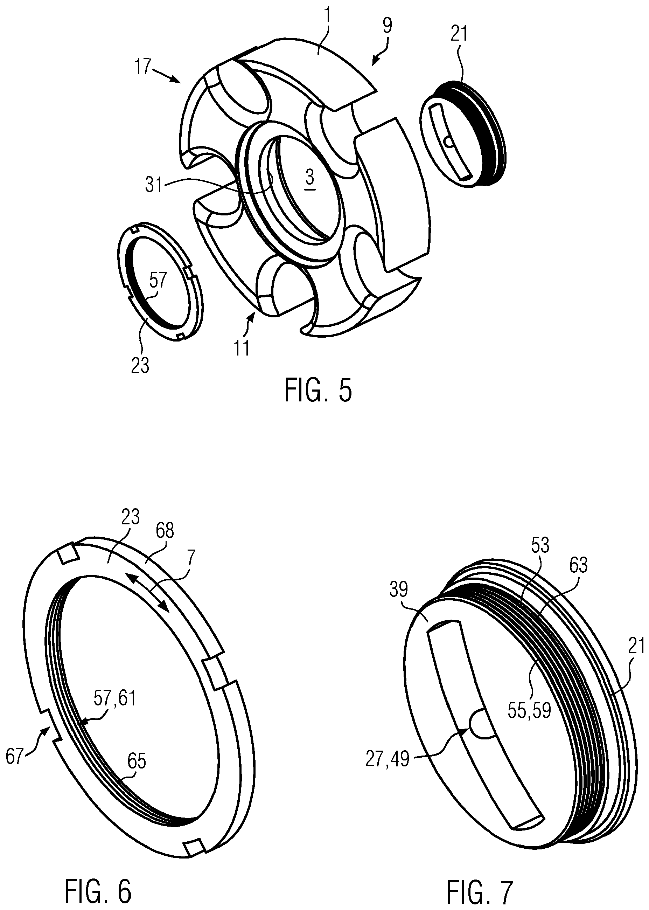

Auf verschiedene Arten der Befestigung der beiden Adapterteile 21 und 23 miteinander ist weiter unten mit Bezug auf die Figuren 5 bis 16 eingegangen.

Im an der Felge 1 montierten Zustand 25 des Zubehöradapters 19 ragen beide Adapterteile 21 und 23 bevorzugt nicht in den Bereich des Lochkreises 15 hinein. Somit blockiert der Zubehöradapter 19 nicht die Löcher 15 zur Montage der Felge 1 an einem Kraftfahrzeug.

Eines der beiden Adapterteile 21 oder 23, vorzugsweise das karosserieseitige Adapterteil 21 weist zwei quer zur Achse 5 voneinander beabstandete Backen 47 auf, wobei das Verbindungselement 27 als ein die beiden Backen 47 miteinander verbindender Steg 49 gebildet ist. Bei dieser Ausgestaltung ist das Verbindungselement 27 am Zentriervorsprung 39 angeordnet.

Quer zu einer Längsrichtung des Stegs 49 kann sich zwischen den beiden Backen 47 ein Hohlraum 51 befinden. Der Hohlraum 51 kann zur Aufnahme eines Befestigungsmittels eines Kraftfahrzeugzubehörs, insbesondere eines Hakens genutzt werden. Dadurch kann die Befestigung eines Kraftfahrzeugzubehörs am Verbindungselement 27 erleichtert sein. Die Backen 47 sind bevorzugt Teil des Zentriervorsprungs 39.

An radial liegenden Außenseiten des Zentriervorsprungs 39 kann eine durchgehende Außenwandung 53 den Hohlraum 51 schließen, sodass der Zentriervorsprung 39 entlang der Umfangsrichtung 7 durchgängig nach außen hin geschlossen ist.

Im Folgenden ist eine weitere vorteilhafte Ausführungsform des erfindungsgemäßen Zubehöradapters 19 mit Bezug auf die Figuren 5 bis 7 beschrieben. Der Kürze halber ist dabei nur auf die Unterschiede zu der mit Bezug auf die Figuren 2 bis 4 beschriebenen Ausführungsform eingegangen.

Die Adapterteile 21 und 23 des Zubehöradapters 19 sind mit zueinander komplementären Befestigungsmitteln 55 und 57 versehen. Die zueinander komplementären Befestigungsmittel 55 und 57 sind im an der Felge 1 montierten Zustand des Zubehöradapters 19 miteinander in Eingriff. Bei der beispielhaft dargestellten Ausführungsform sind die beiden Befestigungsmittel 55 und 57 als zueinander komplementäre Gewinde 59 und 61 gebildet.

Die beiden Gewinde 59 und 61 sind im an der Felge 1 montierten Zustand 25 des Zubehöradapters 19 miteinander verschraubt.

Vorzugsweise weist das karosserieseitige Adapterteil 21 ein Außengewinde 63 auf. Das Außengewinde 63 kann insbesondere in der Außenwandung 53 des Zentriervorsprungs 39 gebildet sein.

Im an der Felge 1 montierten Zustand 25 ragt der Zentriervorsprung 39 mit dem Außengewinde 63 bis zur Außenseite 11 der Felge 1, sodass das karosserieseitige Adapterteil 21 mit dem außenseitigen Adapterteil 23 verbunden werden kann.

Das außenseitige Adapterteil 23 weist ein als Innengewinde 65 gebildetes Gewinde 61 auf. Das Innengewinde 65 ist bevorzugt komplementär zum Außengewinde 63 geformt.

Um das Aufschrauben des außenseitigen Adapterteils 23 zu erleichtern, weist das außenseitige Adapterteil 23 bevorzugt Werkzeugaufnahmen 67 auf. Die Werkzeugaufnahmen können sich in einer Außenseite 68 des Adapterteils 23 befinden. Lediglich beispielhaft sind die Werkzeugaufnahmen 67 als in Umfangsrichtung 7 äquidistant angeordnete rechteckige Ausnehmungen in der Außenseite 68 dargestellt.

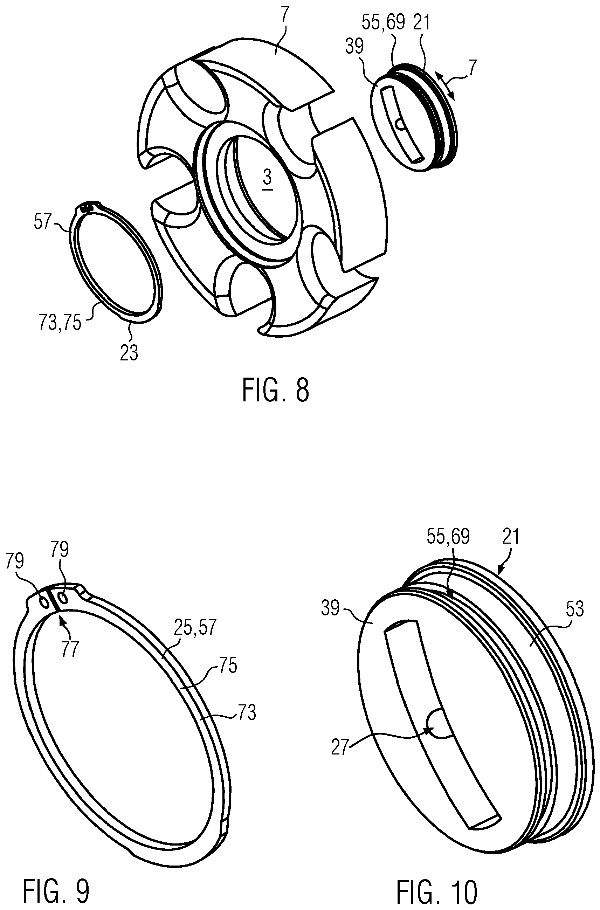

Eine weitere vorteilhafte Ausführungsform des erfindungsgemäßen Zubehöradapters 19 ist im Folgenden mit Bezug auf die Figuren 8 bis 10 beschrieben. Auch hier ist, der Kürze halber, nur auf die Unterschiede zu den zuvor beschriebenen Ausführungsformen eingegangen.

Anstelle eines Außengewindes 63 ist das karosserieseitige Adapterteil 21 an der Außenwandung 53 des Zentriervorsprungs 39 mit einer in Umfangsrichtung 7 umlaufenden Nut 69 versehen.

Das außenseitige Adapterteil 23 ist als in die Nut 69 einsetzbares Sicherungselement 73 gebildet. Das außenseitige Adapterteil 23 stellt also selbst das Befestigungsmittel 57 dar.

Das Sicherungselement 73 ist vorzugsweise ein öffenbar ausgestalteter Sicherungsring 75. Der Sicherungsring 75 weist eine Trennstelle 77 auf, an der der Sicherungsring 75 unterbrochen ist. Dazu weist der Sicherungsring 75 zwei neben der Trennstelle 77 angeordnete Aufnahmeöffnungen 79 für ein Werkzeug, insbesondere für eine Sprengringzange, auf. An Trennstelle 77 kann der Sicherungsring 75 gespreizt werden, um ihn in die Nut 69 zu setzen oder aus dieser zu entnehmen.

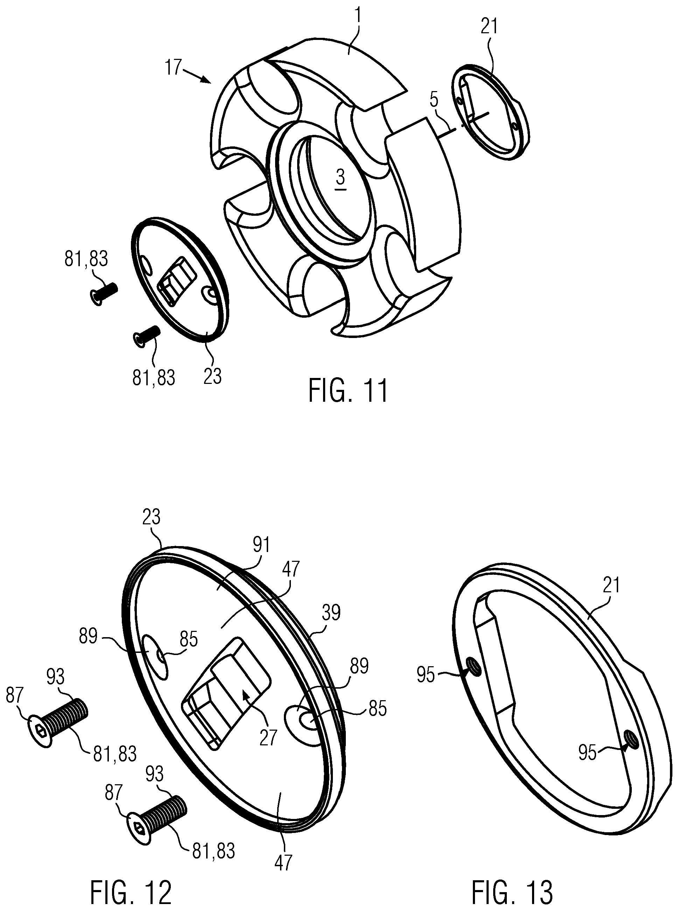

Eine weitere vorteilhafte Ausführungsform des erfindungsgemäßen Zubehöradapters 19 ist im Folgenden mit Bezug auf die Figuren 11 bis 13 beschrieben. Auch hier ist, der Kürze halber, nur auf die Unterschiede zu den zuvor beschriebenen Ausführungsformen eingegangen.

Bei dieser Ausführungsform sind die beiden Adapterteile 21 und 23 nicht direkt miteinander verbindbar ausgestaltet. Stattdessen umfasst der Zubehöradapter 19 zwei separate Verbindungsmittel 81, welche lediglich beispielhaft als Schrauben 83 dargestellt sind.

Die Schrauben 83 können durch Öffnungen 85 im außenseitigen Adapterteil 23 geführt werden. Schraubenköpfe 87 der Schrauben 83 können in Schraubenkopfaufnahmen 89 in einer Außenseite 91 des außenseitigen Adapterteils 23 aufgenommen werden.

Die Gewinde 93 der Schrauben 83 können in komplementär geformte Innengewinde 95 im karosserieseitigen Adapterteil 21 aufgenommen und mit diesen verschraubt werden.

Im zusammengesetzten Zustand 25 erstrecken sich die Schrauben 83 bevorzugt parallel zur Achse 5. Die beiden Schrauben 83 erstrecken sich dabei durch die Mittenbohrung 3 hindurch.

Im Gegensatz zu den zuvor beschriebenen Ausführungsformen ist der Zentriervorsprung 39 bei dieser Ausführungsform am außenseitigen Adapterteil 23 angeordnet. Ebenso sind die Backen 47 und das Verbindungselement 27 am außenseitigen Adapterteil 23 angeordnet.

Das karosserieseitige Adapterteil 21 ist im Wesentlichen ringförmig und weist die beiden Innengewinde 95 für die Schrauben 83 auf.

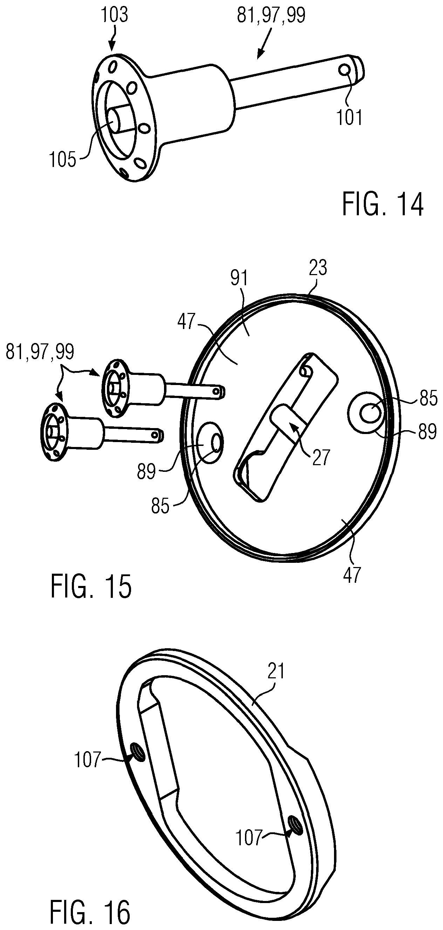

Im Folgenden ist kurz auf eine weitere Ausführungsform eines erfindungsgemäßen Zubehöradapters 19 mit Bezug auf die Figuren 14 bis 16 eingegangen.

Die im Folgenden beschriebene Ausführungsform des Zubehöradapters 19 unterscheidet sich von der mit Bezug auf die Figuren 11 bis 13 beschriebenen Ausführungsform dadurch, dass anstelle von Schrauben Bolzen 97 als Verbindungsmittel 81 verwendet werden.

Die Bolzen 97 sind vorzugsweise Kugelsperrbolzen 99, da sich diese schnell einsetzen und wieder lösen lassen.

Kugelsperrbolzen 99 weisen jeweils wenigstens eine Kugel 101 auf, welche sich im Bolzen 99 versenken lässt, wenn ein am Bolzenkopf 103 befindlicher Knopf 105 betätigt wird. In diesem Zustand lässt sich der Bolzen 99 einsetzen oder lösen.

Ist der Knopf 105 nicht betätigt, steht die Kugel 101 aus dem Bolzen hervor und kann eine formschlüssige Verbindung mit einer hinterschnittenen Einsetzöffnung 107 eingehen. Die hinterschnittenen Einsetzöffnungen 107 sind im karosserieseitigen Adapterteil 21 anstelle der zuvor genannten Innengewinde 95 angeordnet.

Im Folgenden ist kurz auf eine Gleitschutzvorrichtung 109 als Beispiel für ein Kraftfahrzeugzubehör 110 mit Bezug auf die Figur 17 eingegangen.

In Figur 17 ist schematisch ein Fahrzeugrad 111 eines Kraftfahrzeugs 113 dargestellt. Das Fahrzeugrad 111 weist bevorzugt eine Felge 1 der oben beschriebenen Art und einen Reifen 115 auf. Der Reifen 115 hat eine Lauffläche 117.

Auf der Lauffläche 117 kann ein Traktionsmittel 119, vorzugsweise eine Schneekette 121 der Gleitschutzvorrichtung 109, aufliegen.

Die Gleitschutzvorrichtung 109 kann Spann- und Befestigungselemente 123 aufweisen, über die die Gleitschutzvorrichtung 109 am Zubehöradapter 19 angebracht werden kann.

Die Gleitschutzvorrichtung 109 kann ein Befestigungsmittel 125, insbesondere einen Haken 127, aufweisen, der komplementär zum Verbindungselement 27 des Zubehöradapters 19 gebildet ist. Der Haken 127 kann an das Verbindungselement 27 gehängt werden, um die Gleitschutzvorrichtung 109 am Fahrzeugrad 111 zu befestigen.

### Bezugszeichen

- 1: Felge
- 3: Mittenbohrung
- 5: Achse
- 7: Umfangsrichtung
- 9: Karosserieseite
- 11: Außenseite
- 13: Lochkreis
- 15: Löcher
- 17: Ausschnitt
- 19: Zubehöradapter
- 21: karosserieseitiges Adapterteil
- 23: außenseitiges Adapterteil
- 25: an der Felge montierter Zustand des Zubehöradapters
- 27: Verbindungselement
- 29: Aufnahme
- 30: Innenseite
- 31: Schulter
- 33: Innendurchmesser
- 35: Außendurchmesser des karosserieseitigen Adapterteils
- 37: Außendurchmesser des außenseitigen Adapterteils
- 39: Zentriervorsprung
- 41: Innenwandung
- 43: Außendurchmesser des Zentriervorsprungs
- 45: Innendurchmesser des außenseitigen Adapterteils
- 47: Backen
- 49: Steg
- 51: Hohlraum
- 53: Außenwandung
- 55: Befestigungsmittel
- 57: Befestigungsmittel
- 59: Gewinde
- 61: Gewinde
- 63: Außengewinde
- 65: Innengewinde
- 67: Werkzeugaufnahmen
- 68: Außenseite
- 69: Nut
- 73: Sicherungselement
- 75: Sicherungsring
- 77: Trennstelle
- 79: Aufnahmeöffnungen
- 81: Verbindungsmittel
- 83: Schrauben
- 85: Öffnungen
- 87: Schraubenköpfe
- 89: Schraubenkopfaufnahmen
- 91: Außenseite
- 93: Gewinde
- 95: Innengewinde
- 97: Bolzen
- 99: Kugelsperrbolzen
- 101: Kugel
- 103: Bolzenkopf
- 105: Knopf
- 107: Einsetzöffnungen
- 109: Gleitschutzvorrichtung
- 110: Kraftfahrzeugzubehör
- 111: Fahrzeugrad
- 113: Kraftfahrzeug
- 115: Reifen
- 117: Lauffläche
- 119: Traktionsmittel
- 121: Schneekette

## Patentansprüche

1. Zubehöradapter (19) zur Befestigung von Kraftfahrzeugzubehör (110), wie beispielsweise einer Gleitschutzvorrichtung (109), an einer mit einer Mittenbohrung (3) versehenen Felge (1) eines Kraftfahrzeugs (113), wobei der Zubehöradapter (19) wenigstens ein zur karosserieseitigen Anlage an der Felge (1) ausgestaltetes karosserieseitiges Adapterteil (21) und ein zur außenseitigen Anlage an der Felge (1) ausgestaltetes außenseitiges Adapterteil (23) umfasst, wobei eines der Adapterteile (21, 23) ein Verbindungselement (27) zur Anbringung des Kraftfahrzeugzubehörs (110) aufweist, und wobei die beiden Adapterteile (21, 23) in einem an der Felge (1) montierten Zustand (25) des Zubehöradapters (19) durch die Mittenbohrung (3) hindurch unverlierbar miteinander verbunden sind, und wobei wenigstens eines der beiden Adapterteile (21, 23) zwei zumindest abschnittsweise voneinander beabstandete Backen (47) aufweist und das Verbindungselement (27) als ein die beiden Backen (47) miteinander verbindender Steg (49) gebildet ist.

2. Zubehöradapter (19) nach Anspruch 1, wobei wenigstens eines der beiden Adapterteile (21, 23) im Wesentlichen scheiben- und/oder ringförmig ist.

3. Zubehöradapter (19) nach Anspruch 1 oder 2, wobei die beiden Adapterteile (21, 23) zueinander komplementäre Befestigungsmittel (55, 57) aufweisen, die sich bei durch die Mittenbohrung (3) hindurch miteinander verbundenen Adapterteilen (21, 23) miteinander im Eingriff befinden.

4. Zubehöradapter (19) nach Anspruch 3, wobei die Befestigungsmittel (55, 57) der beiden Adapterteile (21, 23) als zueinander komplementäre Gewinde (59, 61) gebildet sind, die im an der Felge (1) montierten Zustand (25) des Zubehöradapters (19) miteinander verschraubt sind.

5. Zubehöradapter (19) nach Anspruch 3, wobei das Befestigungsmittel (55) eines der beiden Adapterteile (21, 23) als eine entlang einer Umfangsrichtung (7) des Zubehöradapters (19) umlaufende Nut (69) und das Befestigungsmittel (57) des anderen Adapterteils (21, 23) als ein in die Nut (69) einsetzbares Sicherungselement (73) gebildet ist.

6. Zubehöradapter (19) nach einem der Ansprüche 1 bis 5, wobei der Zubehöradapter (19) wenigstens ein Verbindungsmittel (81) zur Verbindung der beiden Adapterteile (21, 23) miteinander umfasst.

7. Zubehöradapter (19) nach Anspruch 6, wobei das wenigstens eine Verbindungsmittel (81) eine Schraube (83) oder ein Bolzen (97) ist.

8. Zubehöradapter (19) nach einem der Ansprüche 1 bis 7, wobei eines der beiden Adapterteile (21, 23) einen Zentriervorsprung (39) aufweist, der ausgestaltet ist, an einer Innenwandung (41) der Mittenbohrung (3) anzuliegen.

9. Zubehöradapter (19) nach Anspruch 8, wobei das Befestigungsmittel (55, 57) desjenigen Adapterteils (21, 23), das den Zentriervorsprung (39) aufweist, am Zentriervorsprung (39) angeordnet ist.

10. Zubehöradapter (19) nach einem der Ansprüche 8 oder 9, wobei das Verbindungselement (27) am Zentriervorsprung (39) angeordnet ist.

11. Gleitschutzvorrichtung (109) mit einem auf einer Lauffläche (117) eines Reifens (115) auflegbaren Traktionsmittel (119) und mit einem Zubehöradapter (19) nach einem der Ansprüche 1 bis 10, wobei das Traktionsmittel (119) mittelbar oder unmittelbar am Verbindungsabschnitt (27) befestigt ist.

12. Felge (1) für ein Kraftfahrzeug (113), wobei die Felge (1) mit einer sich entlang einer axialen Richtung (5) der Felge (1) durch die Felge (1) erstreckenden Mittenbohrung (3) versehen ist, umfassend einen Zubehöradapter (19) nach einem der Ansprüche 1 bis 10, wobei das eine Adapterteil (21) an einer Karosserieseite (9) der Felge (1) und das andere Adapterteil (23) an einer Außenseite (11) der Felge (1) angeordnet ist, beide Adapterteile (21, 23) durch die Mittenbohrung (3) hindurch miteinander verbunden sind und das Verbindungselement (27) des Zubehöradapters (19) von außen zugänglich ist.

13. Felge (1) nach Anspruch 12, wobei die Mittenbohrung (3) mit wenigstens einer radial nach innen vorspringenden Schulter (31) versehen ist, die zwischen den beiden miteinander verbundenen Adapterteilen (21, 23) des Zubehöradapters (19) angeordnet ist.

14. Felge (1) nach Anspruch 13, wobei sich eines der beiden Adapterteile (21, 23) in der Mittenbohrung (3) an der Schulter (31) vorbei erstreckt.

## Claims

1. An accessory adapter (19) for fastening motor vehicle accessories (110), such as an anti-skid device (109), to a wheel rim (1) of a motor vehicle (113) provided with a center bore (3), wherein the accessory adapter (19) comprises at least one body-side adapter part (21) configured for body-side abutment against the wheel rim (1) and an outer-side adapter part (23) configured for outer-side abutment against the wheel rim (1), wherein one of the adapter parts (21, 23) includes a connecting portion (27) for attaching the motor vehicle accessory (110), and wherein, in a mounted state (25) of the accessory adapter (19) on the wheel rim (1), the two adapter parts (21, 23) are captively connected to each other through the center bore (3), and wherein at least one of the two adapter parts (21, 23) includes two jaws (47) at least partially spaced from each other, and the connecting portion (27) is formed as a web (49) connecting the two jaws (47) to each other.

2. The accessory adapter (19) according to claim 1, wherein at least one of the two adapter parts (21, 23) is substantially disc-shaped and/or ring-shaped.

3. The accessory adapter (19) according to claims 1 or 2, wherein the two adapter parts (21, 23) include mutually complementary fastening means (55, 57) engaged with each other when the adapter parts (21, 23) are connected to each other through the center bore (3).

4. The accessory adapter (19) according to claim 3, wherein the fastening means (55, 57) of the two adapter parts (21, 23) are formed as mutually complementary threads (59, 61) screwed together in the mounted state (25) of the accessory adapter (19) on the wheel rim (1).

5. The accessory adapter (19) according to claim 3, wherein the fastening means (55) of one of the two adapter parts (21, 23) is formed as a groove (69) extending in a circumferential direction (7) of the accessory adapter (19), and the fastening means (57) of the other adapter part (21, 23) is formed as a safety element (73) insertable into the groove (69).

6. The accessory adapter (19) according to any one of claims 1 to 5, wherein the accessory adapter (19) comprises at least one connecting means (81) for connecting the two adapter parts (21, 23) to each other.

7. The accessory adapter (19) according to claim 6, wherein the at least one connecting means (81) is a screw (83) or a bolt (97).

8. The accessory adapter (19) according to any one of claims 1 to 7, wherein one of the two adapter parts (21, 23) includes a centering protrusion (39) configured to abut against an inner wall (41) of the center bore (3).

9. The accessory adapter (19) according to claim 8, wherein the fastening means (55, 57) of the adapter part (21, 23) including the centering protrusion (39) are arranged on the centering protrusion (39).

10. The accessory adapter (19) according to one of claims 8 or 9, wherein the connecting element (27) is arranged on the centering protrusion (39).

11. An anti-skid device (109) comprising traction means (119) the can be placed on a tread (117) of a tire (115) and an accessory adapter (19) according to any one of claims 1 to 10, wherein the traction means (119) are fastened directly or indirectly to the connecting portion (27).

12. A wheel rim (1) for a motor vehicle (113), wherein the wheel rim (1) is provided with a center bore (3) extending through the wheel rim (1) along an axial direction (5) of the wheel rim (1), comprising an accessory adapter (19) according to any one of claims 1 to 10, wherein one adapter part (21) is arranged on a body side (9) of the wheel rim (1) and the other adapter part (23) is arranged on an outer side (11) of the wheel rim (1), wherein both adapter parts (21, 23) are connected to each other through the center bore (3), and the connecting element (27) of the accessory adapter (19) is accessible from the outside.

13. The wheel rim (1) according to claim 12, wherein the center bore (3) is provided with at least one radially inwardly projecting shoulder (31) arranged between the two adapter parts (21, 23) of the accessory adapter (19) connected to each other.

14. The wheel rim (1) according to claim 13, wherein one of the two adapter parts (21, 23) extends past the shoulder (31) in the center bore (3).

## Revendications

1. Adaptateur d'accessoire (19) pour la fixation d'accessoires de véhicule automobile (110), comme un dispositif antidérapant (109) par exemple, à une jante (1) d'un véhicule automobile (113) comportant un alésage central (3), dans lequel l'adaptateur d'accessoire (19) comprend au moins une partie d'adaptateur côté carrosserie (21) conçue pour être appliquée côté carrosserie sur la jante (1) et une partie d'adaptateur côté extérieur (23) configurée pour être appliquée côté extérieur sur la jante (1), dans lequel l'une des parties d'adaptateur (21, 23) comporte un élément de connexion (27) pour le montage de l'accessoire de véhicule automobile (110), dans lequel les deux parties d'adaptateur (21, 23) sont connectées entre elles de manière captive à travers l'alésage central (3) dans un état monté (25) de l'adaptateur d'accessoire (19) sur la jante (1), et dans lequel au moins l'une des deux parties d'adaptateur (21, 23) comporte deux mâchoires (47) qui sont au moins partiellement espacées entre elles et l'élément de connexion (27) est conformé comme une entretoise (49) connectant les deux mâchoires (47) entre elles.

2. Adaptateur d'accessoire (19) selon la revendication 1, dans lequel au moins l'une des deux parties d'adaptateur (21, 23) est sensiblement en forme de disque et/ou d'anneau.

3. Adaptateur d'accessoire (19) selon la revendication 1 ou 2, dans lequel les deux parties d'adaptateur (21, 23) comportent des moyens de fixation mutuellement complémentaires (55, 57) qui sont en prise entre eux lorsque les parties d'adaptateur (21, 23) sont connectées entre elles à travers l'alésage central (3).

4. Adaptateur d'accessoire (19) selon la revendication 3, dans lequel les moyens de fixation (55, 57) des deux parties d'adaptateur (21, 23) sont conformés comme des filetages mutuellement complémentaires (59, 61), qui sont vissés ensemble dans l'état monté (25) de l'adaptateur d'accessoire (19) sur la jante (1).

5. Adaptateur d'accessoire (19) selon la revendication 3, dans lequel le moyen de fixation (55) de l'une des deux parties d'adaptateur (21, 23) est conformé comme une rainure (69) circonférentielle le long d'une direction circonférentielle (7) de l'adaptateur d'accessoire (19), et le moyen de fixation (57) de l'autre partie d'adaptateur (21, 23) est conformé comme un élément de verrouillage (73) qui peut être inséré dans la rainure (69).

6. Adaptateur d'accessoire (19) selon l'une des revendications 1 à 5, dans lequel l'adaptateur d'accessoire (19) comprend au moins un moyen de connexion (81) pour connecter les deux parties d'adaptateur (21, 23) entre elles.

7. Adaptateur d'accessoire (19) selon la revendication 6, dans lequel ledit au moins un moyen de connexion (81) est une vis (83) ou un boulon (97).

8. Adaptateur d'accessoire (19) selon l'une des revendications 1 à 7, dans lequel l'une des deux parties d'adaptateur (21, 23) comporte une protubérance de centrage (39) configurée pour être appliquée contre une paroi interne (41) de l'alésage central (3).

9. Adaptateur d'accessoire (19) selon la revendication 8, dans lequel le moyen de fixation (55, 57) de la partie d'adaptateur (21, 23) qui comporte la protubérance de centrage (39) est agencé sur la protubérance de centrage (39).

10. Adaptateur d'accessoire (19) selon l'une des revendications 8 et 9, dans lequel l'élément de connexion (27) est agencé sur la protubérance de centrage (39).

11. Dispositif antidérapant (109) avec un moyen de traction (119) pouvant être placé sur la bande de roulement (117) d'un pneu (115) et avec un adaptateur d'accessoire (19) selon l'une des revendications 1 à 10, dans lequel le moyen de traction (119) est fixé directement ou indirectement sur la section de connexion (27).

12. Jante (1) pour un véhicule automobile (113), dans laquelle la jante (1) comporte un alésage central (3) qui s'étend en direction axiale (5) de la jante (1) à travers la jante (1), comprenant un adaptateur d'accessoire (19) selon l'une des revendications 1 à 10, dans laquelle une partie d'adaptateur (21) est agencée sur le côté carrosserie (9) de la jante (1) et l'autre partie d'adaptateur (23) est agencée sur le côté extérieur (11) de la jante (1), les deux parties d'adaptateur (21, 23) sont connectées entre elles à travers l'alésage central (3), et l'élément de connexion (27) de l'adaptateur d'accessoire (19) est accessible depuis l'extérieur.

13. Jante (1) selon la revendication 12, dans laquelle l'alésage central (3) comporte au moins un épaulement ressortant radialement vers l'intérieur (31) qui est agencé entre les deux parties d'adaptateur interconnectées (21, 23) de l'adaptateur d'accessoire (19).

14. Jante (1) selon la revendication 13, dans laquelle l'une des deux parties d'adaptateur (21, 23) s'étend dans l'alésage central (3) au-delà de l'épaulement (31).
